(19)

Europäisches
Patentamt
European
Patent Office
Office européen
des brevets

(11) **EP 4 748 589 A1**

(12) **EUROPEAN PATENT APPLICATION**

(43) Date of publication:
**27.05.2026 Bulletin 2026/22**

(21) Application number: **25209962.7**

(22) Date of filing: **21.10.2025**

(51) International Patent Classification (IPC):
**B60C 1/00** (2006.01)    **B60C 9/20** (2006.01)
**B60C 9/22** (2006.01)    **B60C 11/13** (2006.01)
**C08L 7/00** (2006.01)

(52) Cooperative Patent Classification (CPC):
**B60C 1/0016; B60C 9/2006; B60C 9/22;
B60C 11/13; C08L 7/00;** B60C 2001/0066;
B60C 2009/2016; B60C 2009/2061;
B60C 2011/0033; B60C 2200/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.11.2024 JP 2024204152**

(71) Applicant: **Sumitomo Rubber Industries, Ltd.
Kobe-shi, Hyogo 651-0072 (JP)**

(72) Inventor: **ONO, Shuichiro
Kobe-shi, 651-0072 (JP)**

(74) Representative: **Manitz Finsterwald
Patent- und Rechtsanwaltspartnerschaft mbB
Martin-Greif-Straße 1
80336 München (DE)**

(54) **HEAVY-DUTY TIRE**

(57)    Provided is a heavy-duty tire comprising a tread, a carcass, and a belt layer, wherein the tread is composed of a rubber composition comprising: a rubber component comprising an isoprene-based rubber; and a copolymer resin comprising styrene and cyclopentadiene as monomer components, and wherein S/(a/b) is greater than 7.0, when $a = C_1/T_1$ and $b = C_2/T_2$ are defined, where S represents a total styrene amount, in % by mass, in the rubber composition constituting the tread, $C_1$ represents a content, in % by mass, of an isoprene-based rubber in the rubber composition constituting the tread, $T_1$ represents a total thickness, in mm, of the tread, $C_2$ represents an average content of an isoprene-based rubber in the belt topping rubber covering the belt layer, and $T_2$ represents a total thickness, in mm, of the belt layer.

**EP 4 748 589 A1**

**Description**

TECHNICAL FIELD

The present invention relates to a heavy-duty tire.

BACKGROUND OF THE INVENTION

A heavy-duty tire is required to have a particularly excellent breaking-resistant strength, but breaking-resistant strength and fuel efficiency are in a contradictory relationship. Moreover, in recent years, due to increased consideration of safety, there has been an increasing demand for wet grip performance even for the heavy-duty tire, but wet grip performance and fuel efficiency are in a contradictory relationship. Therefore, it has been required for a method of improving fuel efficiency, breaking-resistant strength, and wet grip performance with a good balance. JP 2021-109935 A describes a heavy-duty tire that has an excellent wet grip performance while maintaining fuel efficiency and breaking-resistant strength.

SUMMARY OF THE INVENTION

It is an object of the present invention to provide a heavy-duty tire that can improve in wet grip performance after long-distance running.

The present invention relates to a heavy-duty tire comprising a tread, a carcass, and a belt layer, wherein the tread is composed of a rubber composition comprising: a rubber component comprising an isoprene-based rubber; and a copolymer resin comprising styrene and cyclopentadiene as monomer components, wherein the carcass comprises a metal cord, wherein the belt layer is provided between the tread and the carcass, wherein a plurality of belt plies constituting the belt layer each consists of a metal cord and a belt topping rubber comprising an isoprene-based rubber, and wherein $S/(a/b)$ is greater than 7.0, when $a=C_1/T_1$ and $b=C_2/T_2$ are defined, where S represents a total styrene amount, in % by mass, in the rubber composition constituting the tread with a mass of the rubber composition constituting the tread being as 100% by mass, $C_1$ represents a content, in % by mass, of an isoprene-based rubber in the rubber composition constituting the tread with a mass of the rubber composition constituting the tread being as 100% by mass, $T_1$ represents a total thickness, in mm, of the tread, $C_2$ represents an average content of an isoprene-based rubber in the belt topping rubber with a mass of the belt topping rubber being as 100% by mass, and $T_2$ represents a total thickness, in mm, of the belt layer.

According to the present invention, provided is a heavy-duty tire that can improve in wet grip performance after long-distance running.

BRIEF DESCRIPTION OF THE DRAWINGS

FIG. 1 is a cross-sectional view of a heavy-duty tire relating to one embodiment of the present invention.
FIG. 2 is a cross-sectional view showing a part of a circumferential groove relating to the present embodiment.
FIG. 3 is a cross-sectional view showing a part of another circumferential groove relating to the present embodiment.
FIG. 4 is a diagram schematically showing a belt ply.

DETAILED DESCRIPTION

The tire that is one embodiment of the present invention is a heavy-duty tire comprising a tread, a carcass, and a belt layer, wherein the tread is composed of a rubber composition comprising: a rubber component comprising an isoprene-based rubber; and a copolymer resin comprising styrene and cyclopentadiene as monomer components, wherein the carcass comprises a metal cord, wherein the belt layer is provided between the tread and the carcass, wherein a plurality of belt plies constituting the belt layer each consists of a metal cord and a belt topping rubber comprising an isoprene-based rubber, and wherein $S/(a/b)$ is greater than 7.0, when $a=C_1/T_1$ and $b=C_2/T_2$ are defined, where S represents a total styrene amount, in % by mass, in the rubber composition constituting the tread with a mass of the rubber composition constituting the tread being as 100% by mass, $C_1$ represents a content, in % by mass, of an isoprene-based rubber in the rubber composition constituting the tread with a mass of the rubber composition constituting the tread being as 100% by mass, $T_1$ represents a total thickness, in mm, of the tread, $C_2$ represents an average content of an isoprene-based rubber in the belt topping rubber with a mass of the belt topping rubber being as 100% by mass, and $T_2$ represents a total thickness, in mm, of the belt layer.

Although it is not intended to be bound by a theory, for example, the following can be considered as a mechanism by which the heavy-duty tire of the present invention can maintain a high wet grip performance even after long-distance running.

(1) By compounding a copolymer resin comprising styrene and cyclopentadiene as monomer components in the tread, wet grip performance during an initial period of use can be improved.

However, styrene has a low compatibility with an isoprene-based rubber, and therefore, in a tread comprising the isoprene-based rubber, the copolymer resin transits from the tread surface to an inner side in a tire radial direction due to running, raising a concern that durability of wet grip performance may be deteriorated. Therefore, (2) by reducing a/b and making a content of the isoprene-based rubber per unit thickness of the belt layer installed on the inner side in the tire radial direction with respect to the tread relatively larger than a content of the isoprene-based rubber per unit thickness of the tread, it is considered that the transition of the copolymer resin can be suppressed.

Furthermore, (3) by increasing a ratio of S to a/b, it is considered that a remarkable effect of enabling maintenance of a high wet grip performance for a long period of time is achieved.

The belt layer preferably comprises a high-angle belt ply having 10 degrees or higher of an absolute value of a cord angle with respect to a tire circumferential direction, and a low-angle belt ply having 5 degrees or lower of an absolute value of a cord angle with respect to the tire circumferential direction.

The belt layer preferably comprises two or more high-angle belt plies and one or more low-angle belt plies as described above, and the low-angle belt ply is preferably provided between the two high-angle belt plies.

The tread preferably has a groove provided with a recessed part that is recessed outward in a groove width direction with respect to a groove edge that appears on a tread surface.

As the tread abrades, the groove width increases, thereby improving drainage performance, which is considered to be able to make it easy to improve wet grip performance after tire abrasion.

From the viewpoint of the effects of the present invention, a is preferably less than 3.0.

The metal cord included in the belt ply preferably has a 1×1 structure from the viewpoint of the effects of the present invention.

A content of the copolymer resin based on 100 parts by mass of the rubber component in the rubber composition constituting the tread is preferably 5 parts by mass or more from the viewpoint of the effects of the present invention.

It is preferable that the rubber component constituting the tread further comprises a styrene-butadiene rubber. When the rubber component constituting the tread comprises a styrene-butadiene rubber, it is considered that the tread that follows the road surface efficiently generates heat.

The rubber composition constituting the tread preferably comprises 10 parts by mass or more of silica based on 100 parts by mass of the rubber component. When the rubber component comprises 10 parts by mass or more of silica, followability to the road surface is improved by an interaction between a silanol group of silica and moisture on the road surface, which is considered to contribute to improvement of wet grip performance.

<Definitions>

A "tread" is a member comprising a part that forms a ground-contacting surface of a tire, and it is a member arranged on an outer side in a tire radial direction with respect to members such as a reinforcing layer, a carcass, and the like, on a cross section of the tire taken along a plane including a tire rotation axis.

A "belt layer" is a layer provided on an outer side in a tire radial direction with respect to a carcass layer, which corresponds to a plurality of working layers in which internal reinforcing materials are inclined at an angle of about 18 to 30 degrees relative to a tire circumferential direction and overlap in the opposite direction, a circumferential belt layer in which the internal reinforcing materials are oriented at an angle of ±10 degrees relative to the tire circumferential direction, or the like.

A "standardized state" is a state where a tire is rim-assembled on a standardized rim and air under a standardized internal pressure is filled, and no load is applied. Unless otherwise specified, a tire in the standardized state is used.

A "dimension of each part of the tire" is a value specified in a standardized condition for one appearing on the outer surface of the tire, unless otherwise specified, while it is a value specified in a condition where, for example, the tire is cut on a plane including a tire rotation axis and the cut tire piece is held to a rim width of a standardized rim for one present inside the tire or on a tire cutting surface.

A "standardized rim" is a rim in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "standardized internal pressure" is an air pressure in a standard system including a standard on which the tire is based, defined by the standard for each tire, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in a case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load in kg" is a load in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of tires that are not defined by the standard, the maximum load capacity $W_L$ calculated separately is defined as a standardized load.

The "maximum load capacity $W_L$ in kg" is calculated by the following equations. Wherein "V" is a virtual volume, in $mm^3$, of a tire, "Dt" is a tire outer diameter, in mm, in a standardized state, "Ht" is a tire cross-sectional height, in mm, in a tire radial direction on a cross section of the tire in a plane including a tire rotation axis, and "Wt" is a tire cross-sectional width, in mm, in a standardized state. When R represents a rim diameter of the tire, Ht can be calculated by (Dt-R)/2. Wt is a value obtained by excluding, if any, patterns or characters on the side surface of the tire. Besides, the "maximum load capacity" has the same meaning as the above-described standardized load.

$$W_L = 0.000011 \times V + 175$$

$$V = \{(Dt/2)^2 - (Dt/2 - Ht)^2\} \times \pi \times Wt$$

A "total thickness of a tread" refers to a thickness of the entire tread on a tire equatorial plane in a cross section obtained by cutting a tire along a plane including a tire rotation axis. Moreover, when the tire has a circumferential groove on the tire equatorial plane, the thickness is a thickness of the entire tread from an intersection of a straight line connecting ends of the tread surface in a tire width direction on the tire equatorial plane and the tire equatorial plane.

A "total thickness of a belt layer" refers to a thickness of the entire belt layer on a tire equatorial plane on a cross section obtained by cutting a tire along a plane including a tire rotation axis.

A "rubber component of a rubber composition" is a component that contributes to crosslinking in the rubber composition and generally has a weight-average molecular weight (Mw) of 10,000 or more.

A "plasticizing agent" is a material that imparts plasticity to a rubber component, which is a component extracted from a rubber composition using acetone. The plasticizing agent includes a plasticizing agent that is liquid (in a liquid state) at 25°C and a plasticizing agent that is solid at 25°C. However, it shall not comprise wax and stearic acid commonly used in the tire industry.

A "content of a plasticizing agent" also includes an amount of a plasticizing agent contained in an extended rubber component previously extended with the plasticizing agent such as oil, a resin component, a liquid rubber component, and the like. The same applies to a content of oil, a content of a resin component, and a content of a liquid rubber, for example, an extending oil is included in the content of oil when an extending component is oil.

<Measuring method>

A "styrene content" is calculated by pyrolysis gas chromatography or NMR measurement ($^1$H-NMR or $^{13}$C-NMR). Unlike physical property values such as a complex elastic modulus (E*) and the like, an amount of a component such as the "styrene content" has a true value that is independent of a measuring method, so it is preferable to use a measuring method with as high accuracy as possible. Besides, in the present specification, "pyrolysis gas chromatography" refers to a method of heating a sample in a pyrolyzer, separating individual components contained in gas phase generated by this heating using a separation column, and analyzing each separated component. The styrene content is applied to, for example, a rubber component having a repeating unit derived from styrene such as an SBR and the like (styrene unit).

A "vinyl content (1,2-bond butadiene unit amount)" is calculated by pyrolysis gas chromatography or NMR measurement ($^1$H-NMR or $^{13}$C-NMR). Similarly with the "styrene content", the "vinyl content" has a true value that is independent of a measuring method, so it is preferable to use a measuring method with as high accuracy as possible. The vinyl content is applied to, for example, a rubber component having a repeating unit derived from butadiene such as an SBR, a BR, and the like.

A "cis content (cis-1,4-bond butadiene unit amount)" is a value measured by infrared absorption spectrometry or NMR measurement ($^1$H-NMR or $^{13}$C-NMR) according to JIS K 6239-2:2017 and is applied to, for example, a rubber component having a repeating unit derived from butadiene such as a BR and the like. Similarly with the "styrene content", the "cis content" has a true value that is independent of a measuring method, so it is preferable to use a measuring method with as high accuracy as possible.

A "total styrene amount S in a rubber composition" is a total styrene amount, in % by mass, in the rubber composition with a mass of the rubber composition being as 100% by mass, which is a total amount of contents of styrene parts contained in rubber components and contents of styrene parts contained in compounding agents other than the rubber components.

The "styrene part" is not particularly limited as long as it is a group having a styrene structure, examples of which include, for example, styrene, α-methylstyrene, vinyltoluene, chlorostyrene, and the like. Besides, in the present specification, when the "styrene part" is styrene (for example, when the styrene part-containing rubber is a styrene-butadiene rubber), the "content of the styrene part" may be expressed as a "styrene content".

A "total styrene amount S, in % by mass, in a rubber composition" can be calculated by multiplying a total styrene amount, in % by mass, in the rubber composition, with a mass of a rubber component being as 100% by mass, by a mass of the rubber component based on a mass of the entire rubber composition.

A "total styrene amount, in % by mass, in a rubber composition with a mass of a rubber component being as 100% by mass" is determined, first, for each rubber component, by calculating a value obtained by multiplying a content, in % by mass, of each styrene part by a mass fraction in the rubber component and adding them up to obtain a total value, in % by mass, next, for styrene part-containing compounding agents other than the rubber components contained in the rubber composition, by calculating a value obtained by multiplying a content, in % by mass, of each styrene part of each styrene part-containing compounding agent by a mass fraction based on 100 parts by mass of the rubber component and adding them up to obtain a total value, in % by mass, and by summing up both total values.

For example, when the rubber component consists of 30% by mass of a first SBR (styrene content: 25% by mass), 60% by mass of a second SBR (styrene content: 27.5% by mass), and 10% by mass of a BR, the rubber composition further comprises, in addition to the rubber component, 20 parts by mass of a first resin having a styrene part (styrene content: 5% by mass) based on 100 parts by mass of the rubber component and 10 parts by mass of a second resin having a styrene part (styrene content: 1% by mass) based on 100 parts by mass of the rubber component, and a mass of the entire rubber composition based on 100 parts by mass of the rubber component is 186 parts by mass, a total styrene amount S in the rubber composition based on 100% by mass of the rubber component is 25.1% by mass = {(25×30/100+27.5×60/100+0×10/100)+(5×20/100+1×10/100)}×100/186=13.5 (% by mass).

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizing agent, and the like.

A "nitrogen adsorption specific surface area (N$_2$SA) of carbon black" is measured according to JIS K 6217-2:2017.

A "nitrogen adsorption specific surface area (N$_2$SA) of silica" is measured by the BET method according to ASTM D3037-93.

An "average primary particle size" is a value obtained by photographing particles using a transmission or scanning electron microscope and calculating an arithmetic average of particle sizes of 400 particles. If a shape of the particle is spherical, a diameter of the sphere is defined as a particle size, and if the shape is other than spherical, a circle equivalent diameter (positive square root of {4 × (area of particle)/π}) is calculated from the microscope image to be defined as a particle size. The average primary particle size is applied to silica, carbon black, etc.

A "softening point of a resin component" is a temperature at which a sphere drops when the softening point specified in JIS K 6220-1:2015 7.7 is measured with a ring and ball softening point measuring device.

A procedure for producing a tire that is one embodiment of the present invention will be described in detail below. However, the following descriptions are illustrative for explaining the present invention, and are not intended to limit the technical scope of the present invention to this description range only.

[Tire]

The heavy-duty tire relating to the present embodiment is a heavy-duty tire comprising a tread and a carcass, wherein the tread is composed of a rubber composition described below, wherein the carcass comprises a metal cord, wherein a belt layer is provided between the tread and the carcass, wherein a plurality of belt plies constituting the belt layer each consists of a metal cord and a belt topping rubber comprising an isoprene-based rubber, and wherein S/(a/b) is greater than 7.0, when a=$C_1/T_1$ and b=$C_2/T_2$ are defined, where S represents a total styrene amount, in % by mass, in the rubber composition constituting the tread with a mass of the rubber composition constituting the tread being as 100% by mass, $C_1$ represents a content, in % by mass, of an isoprene-based rubber in the rubber composition constituting the tread with a mass of the rubber composition constituting the tread being as 100% by mass, $T_1$ represents a total thickness, in mm, of the tread, $C_2$ represents an average content of an isoprene-based rubber in the belt topping rubber with a mass of the belt topping rubber being as 100% by mass, and $T_2$ represents a total thickness, in mm, of the belt layer. The tire of one embodiment of the present invention will be described below with reference to the drawings, but the drawings are merely illustrative. Moreover, the embodiment shown below is merely an example.

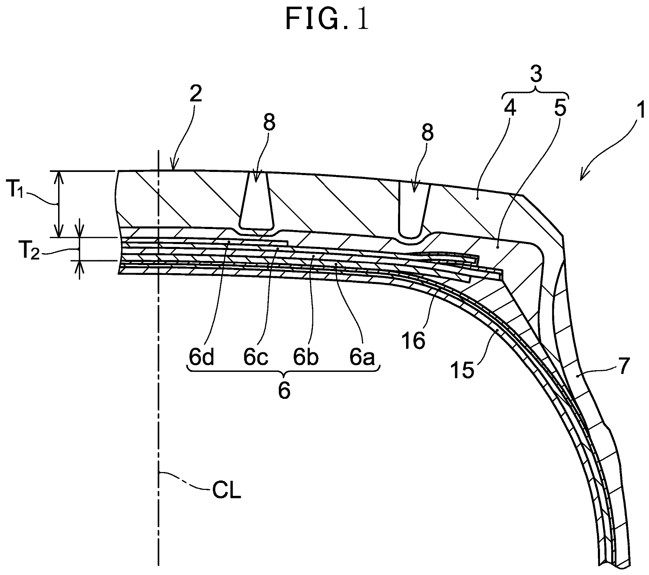

FIG. 1 is a cross-sectional view showing a part of a heavy-duty tire relating to the present embodiment. In FIG. 1, a vertical direction is a radial direction of a heavy-duty tire 1, a horizontal direction is a tire width direction of the heavy-duty tire 1, and a direction perpendicular to a paper surface is a circumferential direction of the heavy-duty tire 1. In FIG. 1, a tire center line CL of the heavy-duty tire 1 also represents an equatorial plane EQ of the heavy-duty tire 1. A shape of this heavy-duty tire 1 is symmetrical with respect to the equatorial plane EQ, except for a tread pattern.

The heavy-duty tire 1 comprises a tread 3, a belt layer 6, a sidewall 7, an inner liner 15, and a carcass 16. The inner liner 15 is located inside the carcass 16. The tread 3 forms a tread surface 2 that is in contact with a road surface. A circumferential groove 8 extending continuously in a tire circumferential direction is formed on the tread surface 2.

<Tread>

The tread 3 may be a tread consisting of a single rubber layer, or may be a tread having a cap rubber layer constituting a tread surface and one or more rubber layers present between the cap rubber layer and the belt layer.

In FIG. 1, the tread 3 comprises a cap rubber layer 4 and a base rubber layer 5, the outer surface of the cap rubber layer 4 constituting the tread surface 2, and the base rubber layer 5 being adjacent to an inner side of the cap rubber layer 4 in a tire radial direction. Moreover, as long as the effects of the present invention are achieved, one or more rubber layers may be further provided between the base rubber layer 5 and the belt layer 6.

In the present specification, a "rubber composition constituting a tread" refers to a rubber composition constituting a cap rubber layer when the tread consists of two or more layers.

The total thickness $T_1$ of the tread is preferably 8.0 mm or more, more 10.0 mm or more, further preferably 12.0 mm or more, particularly preferably 14.0 mm or more. On the other hand, $T_1$ is preferably 22.0 mm or less, more preferably 20.0 mm or less, further preferably 18.0 mm or less, further preferably 17.0 mm or less, particularly preferably 16.0 mm or less.

The tread preferably has a groove provided with a recessed part that is recessed outward in a groove width direction with respect to a groove edge that appears on a tread surface. Such a groove provided with a recessed part is, but not particularly limited to, preferably a circumferential groove.

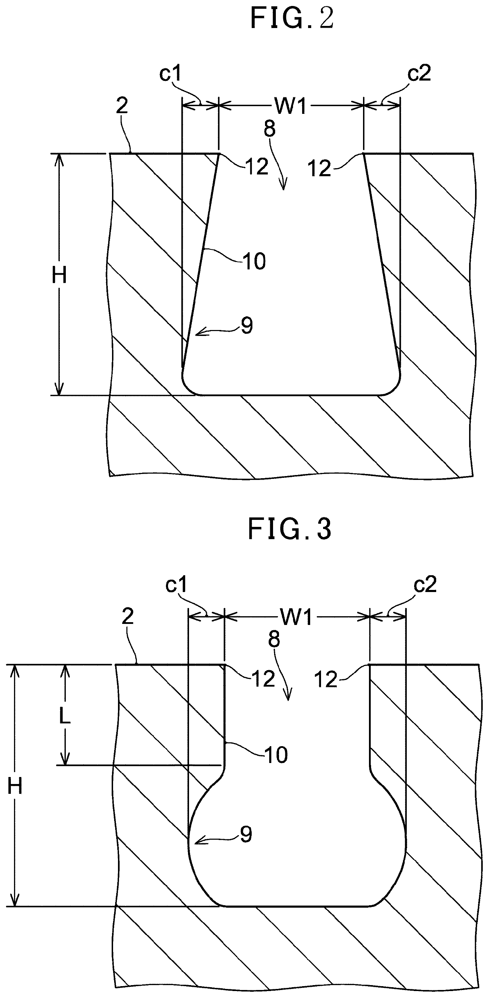

FIG. 2 is a cross-sectional view showing a part of a circumferential groove relating to the present embodiment. In FIG. 2, a vertical direction is a tire radial direction, a horizontal direction is a tire axial direction, and a direction perpendicular to a paper surface is a tire circumferential direction. In FIG. 2, a groove wall 10 of the circumferential groove 8 is provided with a recessed part recessed outward in a groove width direction with respect to a groove edge 12 that appears on the tread surface of the tread. In FIG. 2, a groove width continues to gradually increase from the end on the tire surface side toward the inner side in the tire radial direction, but the present invention is not limited to such as aspect.

FIG. 3 is a cross-sectional view showing a part of another circumferential groove relating to the present embodiment. In FIG. 3, the circumferential groove 8 has a constant groove width in a range of a distance L from the tread surface 2, from which the groove width gradually increases toward the inner side in the tire radial direction and then gradually decreases to form a recessed part 9.

A total recessed amount (C1+C2 in FIGS. 2 and 3) of the circumferential groove 8 is preferably 0.10 to 5.00 times, more preferably 0.20 to 3.00 times, further preferably 0.30 to 1.00 times the groove width W1 of the circumferential groove 8. Besides, if there are a plurality of circumferential grooves each having the recessed part, a total recessed amount of any of the circumferential grooves has only to satisfy the above-described relation, and all grooves each having the recessed part has only to satisfy the above-described relation.

A groove depth H of the circumferential groove is preferably greater than 5 mm, more preferably greater than 8 mm, further preferably greater than 10 mm, particularly preferably greater than 12 mm, from the viewpoint of the effects of the present invention. On the other hand, H is preferably less than 26 mm, more preferably less than 24 mm, further preferably less than 22 mm, particularly preferably less than 20 mm.

<Belt layer and carcass>

The belt layer 6 extends in a tire width direction and is located on an inner side of the tread 3 in a tire radial direction. Moreover, the belt layer 6 is located on an outer side of the carcass 16 in the tire radial direction and reinforces the carcass 16.

In FIG. 1, the belt layer 6 is formed of four belt plies including a first belt ply 6a, a second belt ply 6b, a third belt ply 6c, and a fourth belt ply 6d, which are laminated in this order from the inner side in the tire radial direction. The first belt ply 6a is laminated on the carcass 16. In FIG. 1, the second belt ply 6b has the largest width among the above-described four layers, and the fourth belt ply 6d has the smallest width among the above-described four layers, in a tire rotation axis direction, though the present invention is not limited to such an aspect.

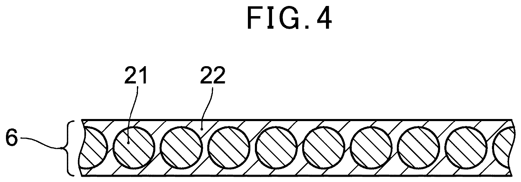

Each of the plurality of belt plies constituting the belt layer 6 consists of a metal cord and a belt topping rubber comprising an isoprene-based rubber. FIG. 4 shows a cross-sectional view of a metal cord 21 taken along a plane perpendicular to a longitudinal direction. Each belt ply constituting the belt layer 6 has a plurality of metal cords 21 and a topping rubber 22. The plurality of metal cords 21 are arranged in parallel in a row. Moreover, the topping rubber 22 covers the metal cord 21, and the entire circumference of each metal cord is covered with the topping rubber 22. The metal cord 21 is embedded in the topping rubber 22.

The metal cord relating to the present embodiment has one or more steel wires that are also referred to as filaments. That is, the metal cord may be a single monofilament cord (i.e., a cord having a $1 \times 1$ structure and consisting of one filament) or may have two or more filaments. The metal cord relating to the present embodiment is preferably composed of one or more and four or less filaments.

When one metal cord has two or more filaments, the metal cord preferably has a twist structure in which these filaments are twisted together along the longitudinal direction. The twist structure is not particularly limited, and can be, for example, a single-twist metal cord having a $1 \times N$ structure or a layer-twist metal cord having an N+M structure.

The single-twist structure can be expressed as, for example, a $1 \times N$ structure. The $1 \times N$ structure means a structure in which N filaments are twisted together so as to form a single layer (one layer). The "single layer" means a structure in which filaments are arranged so as to form a single layer (one layer) along a circumferential direction of one circle, on a cross section perpendicular to a longitudinal direction of a metal cord. Examples of the single-twist structure in the present embodiment include, for example, a $1 \times 2$ structure, a $1 \times 3$ structure, a $1 \times 4$ structure, and the like.

The layer-twist structure has a structure in which a plurality of filaments are wound in layers in order from the central part, on a cross section perpendicular to a longitudinal direction of a metal cord, and can be expressed as, for example, an N+M structure. The N+M structure means a structure having a core in which N filaments are twisted together in a spiral shape along the longitudinal direction and an outer sheath in which M filaments are twisted together in a spiral shape along the longitudinal direction of the core so as to cover the outer periphery of the core. Examples of the layer-twist structure in the present embodiment include, for example, a 2+2 structure and the like.

Metal constituting the metal cord 21 is not particularly limited, but a steel cord is appropriately used from the viewpoints of a high strength and flexibility. A material of the steel filament constituting the steel cord is not particularly limited, and an HT material (High Tensile), an SHT material (Super High Tensile), a UHT material (Ultra High Tensile), etc. can be used. Moreover, a recycled iron obtained by melting a used iron product may be used. Besides, when a steel cord obtained by twisting a plurality of steel filaments together is used, a steel filament, which is pre-formed in a longitudinal direction, may be used, from the viewpoint of improving durability by making it easy for a topping rubber to penetrate into the steel cord.

An outer diameter D of a filament of a metal cord is preferably 0.37 mm or more, more preferably 0.39 mm or more, further preferably 0.41 mm or more, from the viewpoint of securing durability of the metal cord against shock. Moreover, D is preferably 0.49 mm or less, more preferably 0.47 mm or less, further preferably 0.45 mm or less, from the viewpoint of followability of the tread to the road surface.

The metal cord relating to the present embodiment may be provided with a plating layer by a known method. Since the metal cord having a plating layer exerts a high wet heat-resistant adhesive performance even under a harsh condition of high temperature and humidity, peeling between the topping rubber and the metal cord can be prevented, and durability of the tire under a wet-heat condition can be improved. Besides, when the metal cord has a plurality of filaments, each filament can be provided with a plating layer on the surface thereof.

A configuration of the plating layer is not particularly limited, but a plating layer comprising a copper layer and a zinc layer is preferable, and a plating layer comprising a copper layer, a zinc layer, and a cobalt layer is more preferable. Since the metal cord having a ternary plating layer consisting of copper (Cu), zinc (Zn), and cobalt (Co) exerts a high wet heat-resistant adhesive performance even under a harsh condition of high temperature and humidity, peeling between the topping rubber and the metal cord can be prevented, and durability of the tire under a wet-heat condition can be improved.

The number E (also referred to as Ends) of metal cords per 50 mm width in a direction perpendicular to a longitudinal direction of a metal cord is, but not particularly limited to, preferably 20 or more, more preferably 25 or more, further preferably 30 or more, further preferably 35 or more, particularly preferably 40 or more. Moreover, E is preferably 90 or less, more preferably 80 or less, further preferably 70 or less, further preferably 60 or less, particularly preferably 55 or less.

The belt layer 6 preferably comprises a high-angle belt ply having 10 degrees or higher (preferably 10 degrees or higher and 70 degrees or lower, more preferably 12 degrees or higher and 60 degrees or lower, further preferably 15 degrees or higher and 50 degrees or lower) of an absolute value of a cord angle with respect to a tire circumferential direction (hereinafter may be simply referred to as a cord angle), and a low-angle belt ply having 5 degrees or lower (preferably 4 degrees or lower, more preferably 3 degrees or lower, further preferably 2 degrees or lower) of an absolute value of a cord angle with respect to the tire circumferential direction.

Besides, in the specification, a cord angle is an angle relative to a tire circumferential direction when a tire is viewed in a plan view in a tire radial direction, which is an angle at any position in the tire circumferential direction. When a plurality of cords are present at the position in the tire circumferential direction, the cord angle is an angle of at least one of them. Positive and negative signs of the cord angle are defined as positive when a metal cord extends so as to clear away to the right side from the tire center line CL and as negative when the metal cord extends so as to clear away to the left side, respectively.

The belt layer 6 preferably comprises two or more high-angle belt plies and one or more low-angle belt plies, and the low-angle belt ply is preferably provided between the two high-angle belt plies. For example, the first belt ply 6a and the fourth belt ply 6d can be high-angle belt plies, and the second belt ply 6b and/or the third belt ply 6c can be a low-angle belt ply.

A total thickness $T_2$ of the belt layer is preferably 1.0 mm or more, more preferably 1.5 mm or more, further preferably 2.0 mm or more, particularly preferably 2.5 mm or more. On the other hand, $T_2$ is preferably 5.0 mm or less, more preferably 4.5 mm or less, further preferably 4.0 mm or less, particularly preferably 3.5 mm or less.

In FIG. 1, the carcass 16 is formed of one carcass ply, but it is not limited to such an aspect and may be formed of two or more carcass plies. The carcass 16 comprises a metal cord, and the carcass cord is covered with a topping rubber. Similar metal cord and topping rubber constituting the carcass ply can be similarly used as the metal cord and the topping rubber constituting the belt ply.

An absolute value of a cord angle of a metal cord included in the carcass 16 relative to a tire circumferential direction is, but not particularly limited to, preferably 70 degrees or higher and 90 degrees or lower.

In the rubber composition constituting the tread, the total styrene amount S in the rubber composition with the mass of the rubber composition being as 100% by mass is preferably 0.50% by mass or more, more preferably 0.70% by mass or more, further preferably 0.90% by mass or more, particularly preferably 1.10% by mass or more, from the viewpoint of the effects of the present invention. On the other hand, an upper limit value of S is, but not particularly limited to, preferably 20% by mass or less, more preferably 15% by mass or less, further preferably 10% by mass or less, particularly preferably 5.0% by mass or less, from the viewpoint of fuel efficiency.

Besides, the total styrene amount in the rubber composition can be appropriately adjusted depending on types and compounding amounts of rubber components described below. For example, the total styrene amount S can be increased by increasing a compounding amount of a styrene-butadiene rubber, compounding a styrene-butadiene rubber having a high styrene content, compounding a resin component comprising styrene as a monomer component, or the like. Conversely, the total styrene content S can be decreased by decreasing a compounding amount of a styrene-butadiene rubber or the like.

In the rubber composition constituting the tread, the content $C_1$ of the isoprene-based rubber in the rubber composition with the mass of the rubber composition being as 100% by mass is preferably 15% by mass or more, more preferably 20% by mass or more, further preferably 25% by mass or more, further preferably 30% by mass or more, further preferably 35% by mass or more, particularly preferably 40% by mass or more. On the other hand, $C_1$ is preferably 60% by mass or less, more preferably 55% by mass or less, further preferably 50% by mass or less, particularly preferably 47% by mass or less.

The value a calculated from $C_1/T_1$ is an index representing a content of an isoprene-based rubber per unit thickness in the rubber composition constituting the tread. The value a is preferably 1.0 or more, more preferably 1.5 or more, further preferably 2.0 or more, particularly preferably 2.5 or more. On the other hand, the value a is preferably 7.0 or less, more preferably 6.0 or less, further preferably 5.0 or less, further preferably 4.0 or less, further preferably 3.5 or less, particularly preferably less than 3.0.

As the rubber composition constituting the belt topping rubber, those commonly used in the tire industry for covering a metal cord can be used.

A rubber component that can be used for the belt topping rubber is not particularly limited, examples of which include an isoprene-based rubber such as a natural rubber (NR), an isoprene rubber (IR), and the like, a butadiene rubber (BR), a styrene-butadiene rubber (SBR), a styrene-isoprene-butadiene rubber (SIBR), a chloroprene rubber (CR), an acrylonitrile-butadiene rubber (NBR), and the like. The rubber component preferably comprises 50% by mass or more, more preferably comprises 60% by mass or more, further preferably comprises 70% by mass or more of an isoprene-based rubber.

In the rubber composition constituting the belt topping rubber, a component to be compounded other than the rubber component is not particularly limited, but for example, the following ones can be used in the following amounts based on 100 parts by mass of the rubber component.

Table 1

| Compounding amount (parts by mass) | |
|---|---|
| Carbon black | 50 to 100 |
| Oil | 1,5 |
| Antioxidant | 0 to 3 |
| Cobalt stearate | 0 to 3 |
| Zinc oxide | 3 to 20 |
| Sulfur | 1 to 10 |
| Vulcanization accelerator | 0 to 10 |

In the rubber composition constituting the belt topping rubber, the content $C_2$ of the isoprene-based rubber in the rubber composition with the mass of the rubber composition being as 100% by mass is preferably 30% by mass or more, more preferably 40% by mass or more, further preferably 45% by mass or more, further preferably 50% by mass or more, particularly preferably 52% by mass or more. On the other hand, $C_2$ is preferably 66% by mass or less, more preferably 64% by mass or less, further preferably 62% by mass or less, particularly preferably 60% by mass or less.

The value b calculated from $C_2/T_2$ is an index representing a content of an isoprene-based rubber per unit thickness in the rubber composition constituting the belt topping rubber. The value b is preferably 6.0 or more, more preferably 9.0 or more, further preferably 12.0 or more, particularly preferably 15.0 or more. On the other hand, the value b is preferably 60.0 or less, more preferably 50.0 or less, further preferably 40.0 or less, particularly preferably 30.0 or less.

From the viewpoint of the effects of the present invention, a/b is preferably less than 1.0, more preferably less than 0.80, further preferably less than 0.60, further preferably less than 0.40, further preferably less than 0.30, particularly preferably less than 0.25. On the other hand, a/b is preferably greater than 0.05, more preferably greater than 0.07, further preferably greater than 0.09, further preferably greater than 0.11, particularly preferably greater than 0.13.

S/(a/b) is greater than 7.0, preferably greater than 7.2, more preferably greater than 7.4, further preferably greater than 7.5, from the viewpoint of the effects of the present invention. On the other hand, an upper limit value of S/(a/b) is, but not particularly limited to, preferably less than 200, more preferably less than 150, further preferably less than 100, further preferably less than 50, further preferably less than 40, further preferably less than 30, particularly preferably less than 20.

[Rubber composition constituting tread]

The rubber composition constituting the tread relating to the present embodiment (hereinafter referred to as the rubber composition relating to the present embodiment) comprises: a rubber component comprising an isoprene-based rubber; and a copolymer resin comprising styrene and cyclopentadiene as monomer components, any of which can be produced using raw materials described below. The rubber composition relating to the present embodiment will be described below.

<Rubber component>

In the rubber composition relating to the present embodiment, a diene-based rubber is appropriately used as a rubber component. Examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. Moreover, these diene-based rubbers may be modified rubbers treated with modifying groups capable of interacting with fillers such as carbon black, silica, and the like, or may be hydrogenated rubbers obtained by hydrogenating a part of an unsaturated bond. The diene-based rubber may be used alone, or two or more thereof may be used in combination. Moreover, as the diene-based rubber, an extended rubber which has been previously extended with a plasticizing agent which will be mentioned later may be used.

A content of a diene-based rubber in the rubber component is preferably 70% by mass or more, more preferably 80% by mass or more, further preferably 90% by mass or more, particularly preferably 95% by mass or more. Moreover, the rubber component may be one consisting of a diene-based rubber.

The rubber component relating to the present embodiment comprises an isoprene-based component as an essential component. The rubber component preferably comprises an isoprene-based rubber and an SBR, and may be a rubber component consisting of an isoprene-based rubber and an SBR.

(Isoprene-based rubber)

As an isoprene-based rubber, for example, those common in the tire industry can be used, such as an isoprene rubber (IR), a natural rubber, and the like. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

An NR is not particularly limited, and those common in the tire industry can be used, examples of which include, for example, SIR20, RSS#3, TSR20, and the like.

A content of an isoprene-based rubber in the rubber component is preferably 30% by mass or more, more preferably 45% by mass or more, further preferably 60% by mass or more, particularly preferably 75% by mass or more, from the viewpoint of the effects of the present invention. On the other hand, an upper limit value of the content is, but not particularly limited to, preferably 95% by mass or less, more preferably 90% by mass or less, further preferably 85% by mass or less.

(SBR)

An SBR is not particularly limited, examples of which include, for example, an unmodified solution-polymerized SBR (S-SBR) and an emulsion-polymerized SBR (E-SBR), modified SBRs (a modified S-SBR, a modified E-SBR) thereof, and the like. Examples of the modified SBR include an SBR modified at its terminal and/or main chain, a modified SBR coupled with tin, a silicon compound, etc. (a modified SBR of condensate or having a branched structure, etc.), and the like. Furthermore, hydrogenated ones of these SBRs (hydrogenated SBRs) and the like can also be used. These SBRs may be used alone, or two or more thereof may be used in combination.

As SBRs relating to the present embodiment, an extended SBR can be used, and a non-extended SBR can also be used. An extending amount of the extended SBR, i.e., a content of an extending plasticizing agent contained in the SBR when used is preferably 10 to 50 parts by mass based on 100 parts by mass of a rubber solid content of the SBR.

As the SBRs listed above, for example, those commercially available from Sumitomo Chemical Co., Ltd., JSR Corporation, Asahi Kasei Corporation, Zeon Corporation, ZS Elastomer Co., Ltd., etc. can be used.

A styrene content of an SBR can be appropriately set so that S/(a/b) falls within the above-described ranges, but it is preferably 5% by mass or more, more preferably 7% by mass or more, further preferably 10% by mass or more. On the other hand, the styrene content of the SBR is preferably less than 40% by mass, more preferably less than 35% by mass, further preferably less than 30% by mass, particularly preferably less than 25% by mass. Besides, in the present specification, the styrene content of the SBR is measured by the above-described measuring method.

A vinyl content of an SBR is preferably 10 mol% or more, more preferably 15 mol% or more, further preferably 20 mol% or more. Moreover, the vinyl content of the SBR is preferably 60 mol% or less, more preferably 50 mol% or less, further preferably 45 mol% or less. Besides, in the present specification, the vinyl content of the SBR is measured by the above-described measuring method.

A glass transition point (Tg) of an SBR is preferably -75°C or higher, more preferably -70°C or higher, further preferably -65°C or higher, from the viewpoint of wet grip performance. Moreover, the Tg of the SBR is preferably -40°C or lower, more preferably -45°C or lower, further preferably -50°C or lower, particularly preferably -55°C or lower, from the viewpoint of fuel efficiency.

A weight-average molecular weight (Mw) of an SBR is preferably greater than 100,000, more preferably greater than 150,000, further preferably greater than 200,000. Moreover, the Mw is preferably less than 2,000,000, more preferably less than 1,500,000, further preferably less than 1,000,000, from the viewpoints of cross-linking uniformity, etc. Besides, the Mw of the SBR is measured by the above-described measuring method.

As an SBR, an oil-extended SBR can be used, or a non-oil-extended SBR can be used. In the present specification, as SBRs, those commercially available from JSR Corporation, Sumitomo Chemical Co., Ltd., UBE Corporation, Asahi Kasei Corporation, ZS Elastomer Co., Ltd., ARLANXEO, etc. can be used.

A content of an SBR in the rubber component can be appropriately set so that S/(a/b) falls within the above-described ranges, but it is preferably 5% by mass or more, more preferably 7% by mass or more, further preferably 10% by mass or more, further preferably 12% by mass or more, further preferably 15% by mass or more, particularly preferably 18% by mass or more. Moreover, the content of the SBR in the rubber component is preferably 70% by mass or less, more preferably 55% by mass or less, further preferably 40% by mass or less, particularly preferably 25% by mass or less.

(BR)

A BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. These BRs may be used alone, or two or more thereof may be used in combination.

As the high cis BR, for example, those commercially available from Zeon Corporation, UBE Corporation, JSR Corporation, etc. can be used. When the high cis BR is compounded, abrasion resistance can be improved. The cis content of the high cis BR is preferably 95 mol% or more, more preferably 96 mol% or more, further preferably 97 mol% or more. Besides, the cis content of the BR is measured by the above-described measuring method.

A content of a BR in the rubber component is preferably less than 30% by mass, more preferably less than 20% by mass, further preferably less than 10% by mass, particularly preferably less than 5% by mass, from the viewpoint of the effects of the present invention. On the other hand, a lower limit value of the content can be, but not particularly limited to, for example, 1% by mass or more, 3% by mass or more, or 5% by mass or more.

(Other rubber components)

The rubber component may comprise rubber components other than diene-based rubbers as long as they do not affect the effects of the present invention. As other rubber components other than diene-based rubbers, crosslinkable rubber components commonly used in the tire industry can be used, examples of which include, for example, non-diene-based rubbers such as a butyl rubber (IIR), a halogenated butyl rubber, an ethylene-propylene rubber, a polynorbornene rubber, a silicone rubber, a polyethylene chloride rubber, a fluorine rubber (FKM), an acrylic rubber (ACM), a hydrin rubber, and the like. Moreover, besides the above-described rubber components, the rubber component may or may not comprise a known thermoplastic elastomer. Other rubber components may be used alone, or two or more thereof may be used in combination.

(Rubber component synthesized from recycle-derived/biomass-derived raw material)

A monomer that is a structural unit of a synthetic rubber such as an SBR, a BR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) are preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like.

The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a butadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according to ASTM D6866-10. pMC is a ratio of $^{14}$C concentration of a sample to $^{14}$C concentration of a modern standard carbon (modern standard reference) and a value used as an index indicating a biomass ratio of a compound. A significance of this value is mentioned below.

In 1 mole of carbon atoms ($6.02 \times 10^{23}$ pieces), there are about $6.02 \times 10^{11}$ $^{14}$C that are about one trillionth of the number of normal carbon atoms. A half-life of $^{14}$C is 5730 years, and $^{14}$C regularly decreases. Thus, in fossil fuels such as coal, petroleum, a natural gas, and the like, where it is considered that 226,000 years or more have passed since carbon dioxide in the atmosphere was absorbed by plants to be fixed, all of $^{14}$C elements, which were contained in them at the beginning of fixation, decay. Therefore, in the present 21st century, fossil fuels such as coal, petroleum, a natural gas, and the like do not contain any $^{14}$C element. Therefore, chemical substances produced using these fossil fuels as raw materials do not contain any $^{14}$C element as well.

On the other hand, $^{14}$C is constantly generated by cosmic rays causing nuclear reactions in the atmosphere. Thus, decrease in $^{14}$C due to radioactive decay and generation of $^{14}$C due to nuclear reactions are balanced, and the amount of $^{14}$C has been constant in the Earth's atmospheric environment. Therefore, the $^{14}$C concentration of substances derived from biomass resources that have been circulating in the current environment becomes a value of about $1 \times 10^{-12}$ mol% based on total C atoms, as described above. Accordingly, by utilizing a difference between these values, a biomass ratio in a certain compound can be calculated.

This $^{14}$C is generally measured as follows. A $^{13}$C concentration ($^{13}$C/$^{12}$C) and a $^{14}$C concentration ($^{14}$C/$^{12}$C) are measured using an accelerator mass spectrometry based on a tandem accelerator. In the measurements, a $^{14}$C concentration in a circulating carbon in nature as of 1950 is adopted as the modern standard reference for the $^{14}$C concentration. As a specific reference material, an oxalic acid standard provided by NIST (National Institute of Standards and Technology) is used. A specific radioactivity of carbon in this oxalic acid (radioactivity intensity of $^{14}$C per gram of carbon) is sorted for each carbon isotope, $^{13}$C is corrected to a constant value, and a value corrected for attenuation from 1950 to the date of measurement is used as a standard $^{14}$C concentration value (100%). A ratio of this value to a value actually measured for a sample becomes a pMC value.

Thus, if a rubber is produced from a material derived from 100% biomass, the $^{14}$C concentration shows a value of approximately 110 pMC, often not being equal to 100 under a normal condition currently, though there are regional differences and the like. On the other hand, if this $^{14}$C concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a rubber composition.

<Filler>

The rubber composition relating to the present embodiment preferably comprises silica as a filler, and more preferably comprises silica and carbon black. Moreover, the filler may be a filler consisting of silica and carbon black.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, mineral-derived raw materials such as quartz and the like, bio-derived raw materials such as rice husks and the like (e.g., silica made from a biomass material such as rice husks and the like), or silica recycled from a product containing silica. Among them, hydrous silica prepared by a wet process is preferable from the reason that it has many silanol groups. These silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.).

As an amorphous silica extracted from rice husks, those commercially available from Wilmar, etc. can be used.

A nitrogen adsorption specific surface area ($N_2SA$) of silica is preferably greater than 110 $m^2/g$, more preferably greater than 130 $m^2/g$, further preferably greater than 150 $m^2/g$, further preferably greater than 170 $m^2/g$, further preferably greater than 190 $m^2/g$, particularly preferably greater than 210 $m^2/g$, from the viewpoint of the effects of the present invention. Moreover, the $N_2SA$ is preferably less than 350 $m^2/g$, more preferably less than 320 $m^2/g$, further preferably less than 280 $m^2/g$. Besides, the $N_2SA$ of silica is measured by the above-described measuring method.

An average primary particle size of silica is preferably 24 nm or less, more preferably 22 nm or less, further preferably 20 nm or less, particularly preferably 18 nm or less. A lower limit value of the average primary particle size is, but not particularly limited to, preferably 1 nm or more, more preferably 3 nm or more, further preferably 5 nm or more, from the viewpoint of dispersibility of silica. Besides, the average primary particle size of silica is measured by the above-described measuring method.

A content of silica based on 100 parts by mass of the rubber component is preferably 10 parts by mass or more, more preferably 15 parts by mass or more, further preferably 20 parts by mass or more, particularly preferably 25 parts by mass or more, from the viewpoint of the effects of the present invention. Moreover, the content is preferably 100 parts by mass or less, more preferably 80 parts by mass or less, further preferably 60 parts by mass or less, particularly preferably 40 parts by mass or less.

(Carbon black)

Examples of carbon black include, but not particularly limited to, N134, N110, N220, N234, N219, N339, N330, N326, N351, N550, N762, and the like. A raw material of carbon black may be a biomass material such as lignin, a vegetable oil, and the like, or may be a pyrolysis oil obtained by pyrolyzing a waste tire. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Chemical & Material Co., Ltd., Columbia Chemical Corporation, etc. can be used. These carbon black may be used alone, or two or more thereof may be used in combination.

In the present specification, a "recovered carbon black" refers to a carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight loss content due to the oxidative combustion of the recovered carbon black is 87% by mass or less. The recovered carbon black may be expressed by rCB.

The recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). Such carbon black obtained from the pyrolysis process usually lacks a functional group on its surface, as mentioned in [0004] of JP 6856781 B (A comparison of surface morphology and chemistry of pyrolytic carbon blacks with commercial carbon blacks, Powder Technology 160 (2005) 190-193).

The recovered carbon black may lack a functional group on its surface or may be treated so that its surface comprises a functional group. The treatment performed so that the surface of the recovered carbon black comprises a functional group can be implemented by a conventional method. For example, in EP3173251 A, carbon black comprising a hydroxyl and/or carboxyl group on its surface is obtained by treating carbon black obtained from a pyrolysis process with potassium permanganate under an acidic condition. Moreover, in JP 6856781 B, carbon black whose surface is activated is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group.

As the recovered carbon black, those commercially available from Strebl Green Carbon Pte Ltd., LD Carbon, etc. can be used.

A nitrogen adsorption specific surface area ($N_2SA$) of carbon black is preferably 30 $m^2/g$ or more, more preferably 50 $m^2/g$ or more, further preferably 70 $m^2/g$ or more, particularly preferably 90 $m^2/g$ or more, from the viewpoint of reinforcing property. Moreover, it is preferably 200 $m^2/g$ or less, more preferably 150 $m^2/g$ or less, further preferably 120 $m^2/g$ or less, from the viewpoints of fuel efficiency and processability.

An average primary particle size of carbon black is preferably 36 nm or less, more preferably 32 nm or less, further preferably 28 nm or less, particularly preferably 24 nm or less. A lower limit of the average primary particle size is, but not particularly limited to, preferably 5 nm or more, more preferably 8 nm or more, further preferably 10 nm or more.

A content of carbon black when compounded based on 100 parts by mass of the rubber component is preferably 10 parts by mass or more, more preferably 20 parts by mass or more, further preferably 30 parts by mass or more, particularly preferably 35 parts by mass or more, from the viewpoint of reinforcing property. Moreover, it is preferably 80 parts by mass or less, more preferably 70 parts by mass or less, further preferably 60 parts by mass or less, particularly preferably 50 parts by mass or less, from the viewpoint of suppressing heat generation.

(Other fillers)

Fillers other than silica and carbon black are not particularly limited, and, for example, those commonly used in the tire industry can be compounded such as aluminum hydroxide, alumina (aluminum oxide), calcium carbonate, magnesium sulfate, talc, clay, biochar (BIOCHAR), and the like. These other fillers may be used alone, or two or more thereof may be used in combination.

A total content of fillers based on 100 parts by mass of the rubber component is preferably 50 parts by mass or more, more preferably 55 parts by mass or more, further preferably 60 parts by mass or more, particularly preferably 65 parts by mass or more, from the viewpoint of the effects of the present invention. Moreover, the content is preferably 140 parts by mass or less, more preferably 130 parts by mass or less, further preferably 120 parts by mass or less.

A content of silica in the filler is preferably 25% by mass or more, more preferably 30% by mass or more, further preferably 35% by mass or more, particularly preferably 40% by mass or more. Moreover, the content of silica in the filler is preferably 95% by mass or less, more preferably 90% by mass or less, further preferably 80% by mass or less, particularly preferably 70% by mass or less.

(Silane coupling agent)

Silica is preferably used in combination with a silane coupling agent. The silane coupling agent is not particularly limited, and any silane coupling agent used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based silane coupling agents are preferably compounded. As the silane coupling agent, for example, those commercially available from Evonik Industries AG, Momentive Performance Materials, etc. can be used. These silane coupling agents may be used alone, or two or more thereof may be used in combination.

A total content of silane coupling agents when compounded based on 100 parts by mass of the rubber component is preferably 0.5 parts by mass or more, more preferably 1.0 parts by mass or more, further preferably 2.0 parts by mass or more, particularly preferably 4.0 parts by mass or more, from the viewpoint of enhancing dispersibility of silica. Moreover, it is preferably 20 parts by mass or less, more preferably 15 parts by mass or less, further preferably 12 parts by mass or less, from the viewpoint of preventing deterioration of abrasion resistance.

<Plasticizing agent>

The rubber composition relating to the present embodiment comprises, as a plasticizing agent, a copolymer resin comprising styrene and cyclopentadiene as monomer components (hereinafter simply referred to as a "copolymer resin"), and may comprise other plasticizing agents in addition to the copolymer resin. Examples of other plasticizing agents include, for example, resin components other than the copolymer resin, oil, a liquid polymer, an ester-based plasticizing agent, and the like. These plasticizing agents may be ones derived from mineral resources such as petroleum, a natural gas, and the like, or naphtha-derived ones recycled from a rubber product or a non-rubber product. Moreover, low-molecular-weight hydrocarbon components obtained by pyrolyzing used tires or products containing various components and performing extraction from the pyrolysate may be used as plasticizing agents. These plasticizing agents may be used alone, or two or more thereof may be used in combination.

(Resin component)

The rubber composition relating to the present embodiment comprises, as a resin component, a copolymer resin comprising styrene and cyclopentadiene as monomer components, and may comprise resin components other than the copolymer resin which are used in combination. The resin component that can be used in the present embodiment is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. Each resin component may also be used alone, respectively, or two or more thereof may be used in combination.

<<Copolymer resin>>

A copolymer resin is not particularly limited as long as it is resin comprising styrene and cyclopentadiene as monomer components, and may further comprise other monomer components. Moreover, it may be one obtained by hydrogenating or modifying them.

The above-described "styrene" constituting a monomer component may be a compound having a styrene structure other than styrene, examples of which include, for example, styrene, $\alpha$-methylstyrene, vinyltoluene, chlorostyrene, and the like. Styrene-based monomers such as vinyltoluene (methylstyrene) and the like are contained, for example, in a C9 fraction. The other monomer components are not particularly limited, but are preferably monomer components commonly used in petroleum resins, example of which include, for example, C9 fractions other than monomers having a styrene structure, and the like. Examples of the C9 fractions other than the monomers having a styrene structure include, for example, at least one selected from the group consisting of coumarone, indene, methylindene, and the like.

The copolymer resin is preferably a DCPD-C9 resin that is a copolymer of cyclopentadiene and/or dicyclopentadiene with a C9 fraction described below. Moreover, it may be one obtained by hydrogenating or modifying the DCPD-C9 resin.

As the copolymer resin comprising styrene and cyclopentadiene as monomer components, for example, those commercially available from Exxon Mobil Corporation, ENEOS Corporation, Zeon Corporation, Maruzen Petrochemical Co., Ltd., etc. can be used. The copolymer resin may be used alone, or two or more thereof may be used in combination.

A content of a styrene part in the copolymer resin is preferably 0.5% by mass or more, more preferably 0.8% by mass or more, further preferably 1.0% by mass or more, further preferably 2.0% by mass or more, further preferably 3.0% by mass or more, further preferably 4.0% by mass or more, particularly preferably 5.0% by mass or more, from the viewpoint of the effects of the present invention. Moreover, an upper limit value of the content of the styrene part can be, but not particularly limited to, for example, less than 50% by mass, less than 40% by mass, less than 30% by mass, less than 20% by mass, or less than 10% by mass.

A softening point of a copolymer resin is preferably higher than 70°C, more preferably higher than 80°C, further preferably higher than 90°C, particularly preferably higher than 100°C, from the viewpoint of the effects of the present invention. Moreover, it is preferably lower than 150°C, more preferably lower than 140°C, further preferably lower than 130°C, from the viewpoints of processability and improvement of dispersibility of a rubber component with a filler. Besides, the softening point of the copolymer resin is measured by the above-described measuring method.

A content of a copolymer resin based on 100 parts by mass of the rubber component is preferably 1 part by mass or more, more preferably 3 parts by mass or more, further preferably 5 parts by mass or more, further preferably 7 parts by mass or more, particularly preferably 10 parts by mass or more. Moreover, the content is preferably 50 parts by mass or less, more preferably 40 parts by mass or less, further preferably 30 parts by mass or less, particularly preferably 25 parts by mass or less.

Resin components other than the copolymer resin are not particularly limited, and any resin commonly used in the tire industry can be used, examples of which include, for example, a C9-based resin, a C5-based resin, a C5/C9-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. Each resin component may also be used alone, respectively, or two or more thereof may be used in combination.

<<C9-based resin>>

A "C9-based resin" refers to a resin obtained by polymerizing C9 fractions, and may be a polymer obtained by polymerizing a C9 fraction alone or a copolymer obtained by copolymerizing a C9 fraction with other components. For example, resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

<<C5-based resin>>

A "C5-based resin" refers to resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

<<C5/C9-based resin>>

A "C5/C9-based resin" refers to a resin obtained by copolymerizing the C5 fraction and the C9 fraction and may be one obtained by hydrogenating or modifying them. As the C5/C9-based resin, for example, those commercially available from Tosoh Corporation, Zibo Luhua Hongjin New Material Group Co., Ltd, etc. can be appropriately used.

<<Aromatic vinyl-based resin>>

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying them. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

<<Coumarone-based resin>>

A "coumarone-based resin" refers to a resin comprising coumarone as a monomer component and may be one obtained by hydrogenating or modifying it. As the coumarone-based resin, for example, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

<<Indene-based resin>>

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

<<Terpene-based resin>>

A "terpene-based resin" refers to a resin comprising a terpene compound such as $\alpha$-pinene, $\beta$-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

<<Rosin-based resin>>

A "rosin-based resin" refers to a resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

<<Phenol-based resin>>

A "phenol-based resin" refers to a resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

A content of a resin component based on 100 parts by mass of the rubber component (a total amount of all of a plurality of resin components when used in combination) is preferably 1 part by mass or more, more preferably 3 parts by mass or more, further preferably 5 parts by mass or more, further preferably 7 parts by mass or more, particularly preferably 10 parts by mass or more. Moreover, the content is preferably 50 parts by mass or less, more preferably 40 parts by mass or less, further preferably 30 parts by mass or less, particularly preferably 25 parts by mass or less.

(Oil)

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant, may be used. Oil may be used alone, or two or more thereof may be used in combination.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extracted Solvate), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like. The mineral oil may be used alone, or two or more thereof may be used in combination.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C. The vegetable oil may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. Acylglycerol is not particularly limited, and may be 1-monoacylglycerol, 2-monoacylglycerol, 1,2-diacylglycerol, 1,3-diacylglycerol, or triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at 25°C.

As a method of confirming whether the rubber composition comprises acylglycerol, the confirmation can be performed by, but not particularly limited to, $^1$H-NMR measurement. For example, a heavy chloroform in which a rubber composition comprising triacylglycerol is immersed at 25°C for 24 hours and then removed is subjected to $^1$H-NMR at room

temperature, and signals near 5.26 ppm, near 4.28 ppm, and near 4.15 ppm are observed under a condition that a signal of tetramethylsilane (TMS) is set to 0.00 ppm. The signals are presumed to be derived from hydrogen atoms bonded to carbon atoms adjacent to oxygen atoms of an ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like. Moreover, examples of the saturated fatty acid include butyric acid, lauric acid, and the like.

Among them, as the fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid may be used, or a vegetable oil modified by transesterification or the like may be used. Moreover, in order to produce a vegetable oil comprising such fatty acid, a plant may be improved by selective breeding, gene recombination, genome editing, or the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO Group, Ltd., etc. can be used.

Examples of the animal oil include a fish oil, a beef tallow, a whale oil, or an oleyl alcohol that may be derived therefrom, etc.

A content of oil when compounded based on 100 parts by mass of the rubber component (a total amount of all of a plurality of oil when used in combination) is preferably 1 part by mass or more, more preferably 3 parts by mass or more, further preferably 5 parts by mass or more. Moreover, the content is preferably 30 parts by mass or less, more preferably 20 parts by mass or less, further preferably 15 parts by mass or less.

(Liquid polymer)

A liquid polymer is not particularly limited as long as it is a polymer in a liquid state at 25°C, examples of which include, for example, a liquid rubber such as a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid polymers may be used alone, or two or more thereof may be used in combination.

A weight-average molecular weight (Mw) of a liquid polymer is usually less than 10000, preferably 9000 or less, more preferably 6000 or less, further preferably 4500 or less. Moreover, the Mw of the liquid rubber is preferably 100 or more, more preferably 500 or more, further preferably 1000 or more, further preferably 1500 or more, particularly preferably 2000 or more. When the Mw of the liquid polymer is within the above-described ranges, the effects of the present invention tend to be better obtained. Besides, in the specification, the liquid polymer is not included in the above rubber component.

(Ester-based plasticizing agent)

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agent may be used alone, or two or more thereof may be used in combination.

A content of a plasticizing agent based on 100 parts by mass of the rubber component (a total amount of all of a plurality of plasticizing agents when used in combination) is preferably 1 part by mass or more, more preferably 3 parts by mass or more, further preferably 5 parts by mass or more, further preferably 7 parts by mass or more, particularly preferably 10 parts by mass or more, from the viewpoint of the effects of the present invention. Moreover, the content is preferably 50 parts by mass or less, more preferably 40 parts by mass or less, further preferably 30 parts by mass or less, particularly preferably 25 parts by mass or less.

<Other compounding agents>

The rubber composition relating to the present embodiment can appropriately comprise compounding agents conventionally and generally used in the tire industry, for example, a vulcanized rubber particle (rubber powder), an antioxidant, wax, processing aid, stearic acid, zinc oxide, a vulcanizing agent, a vulcanization accelerator, and the like, in addition to the above-described components.

A vulcanized rubber particle is a particle made of a vulcanized rubber, and specifically, a rubber powder and the like specified in JIS K 6316:2017 can be used. From the viewpoints of environmental considerations and costs, a recycled rubber powder produced from a pulverized product of a waste tire or the like is preferable. The vulcanized rubber particle may be used alone, or two or more thereof may be used in combination.

The vulcanized rubber particle is not particularly limited and may be a non-modified vulcanized rubber particle or a modified vulcanized rubber particle.

As commercially available products of vulcanized rubbers, for example, products from Lehigh Technologies, Muraoka Rubber Reclaiming Co., Ltd., etc. can be used.

Examples of the antioxidant include, but not particularly limited to, a naphthylamine-based antioxidant such as phenyl-$\alpha$-naphthylamine and the like; a diphenylamine-based antioxidant such as an octylated diphenylamine, 4,4'-bis($\alpha,\alpha$'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, a styrenated phenol, and the like; bis-, tris-, and polyphenol-based antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. These antioxidants may be used alone, or two or more thereof may be used in combination.

A content of an antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10 parts by mass or less, more preferably 5.0 parts by mass or less, from the viewpoint of abrasion resistance.

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. Wax may be used alone, or two or more thereof may be used in combination.

A content of wax when compounded based on 100 parts by mass of the rubber component is preferably 0.5 parts by mass or more, more preferably 1.0 parts by mass or more, further preferably 1.5 parts by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. These processing aid may be used alone, or two or more thereof may be used in combination.

A content of processing aid when compounded based on 100 parts by mass of the rubber component is preferably 0.5 parts by mass or more, more preferably 1.0 parts by mass or more, further preferably 1.5 parts by mass or more, from the viewpoint of exhibiting an effect of improving processability. Moreover, it is preferably less than 10 parts by mass, more preferably 8.0 parts by mass or less, further preferably 5.0 parts by mass or less, from the viewpoints of abrasion resistance and breaking strength.

A content of stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of preventing deterioration. Besides, a content of a vulcanizing agent when an oil-containing sulfur is used as the vulcanizing agent shall be a total content of pure sulfur comprised in the oil-containing sulfur.

As a vulcanizing agent other than sulfur, a known organic cross-linking agent can also be used. The organic cross-linking agent is not particularly limited as long as it can form cross-linked chains other than a polysulfide bond, examples of which, include, for example, an alkylphenol-sulfur chloride condensate, hexamethylene-1,6-sodium bisthiosulfate dihydrate, 1,6-bis(N,N'-dibenzylthiocarbamoyldithio)hexane, dicumylperoxide, and the like. As these organic cross-linking agents, those commercially available from Taoka Chemical Co., Ltd., LANXESS, Flexsys, etc. can be used.

Examples of a vulcanization accelerator include, but not particularly limited to, for example, a sulfenamide-based vulcanization accelerator, a thiazole-based vulcanization accelerator, a guanidine-based vulcanization accelerator, a thiuram-based vulcanization accelerator, a thiourea-based vulcanization accelerator, a dithiocarbamic acid-based vulcanization accelerator, an aldehyde-amine-based vulcanization accelerator, an aldehyde-ammonia-based vulcanization accelerator, an imidazoline-based vulcanization accelerator, a xanthate-based vulcanization accelerator, a caprolactam disulfide, and the like. These vulcanization accelerators may be used alone, or two or more thereof may be used in combination. Among them, one or more vulcanization accelerators selected from the group consisting of a sulfenamide-based vulcanization accelerator, a thiazole-based vulcanization accelerator, and a guanidine-based vulcanization accelerator are preferable, from the viewpoint that desired effects can be obtained more appropriately.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Among them, MBTS and MBT are preferable, and MBTS is more preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like.

A content of a vulcanization accelerator when compounded based on 100 parts by mass of the rubber component (a total amount of all of a plurality of vulcanization accelerators when used in combination) is preferably 0.5 parts by mass or more, more preferably 0.7 parts by mass or more, further preferably 1.0 parts by mass or more, from the viewpoint of securing a sufficient vulcanization rate. Moreover, the content of the vulcanization accelerator is preferably 10 parts by mass or less, more preferably 7.0 parts by mass or less, from the viewpoint of suppressing blooming.

In the present specification, various materials comprising carbon atoms (for example, a rubber, oil, resin, a vulcanization accelerator, an antioxidant, a surfactant, etc.) may be derived from carbon dioxide in the atmosphere. As a method of obtaining the various materials from carbon dioxide, carbon dioxide may be directly converted, or methane obtained through a methanation step for synthesizing methane from carbon dioxide may be converted.

[Production of rubber composition and tire]

The rubber composition relating to the present embodiment can be produced by a known method. For example, it can be produced by kneading each of the above-described components using a rubber kneading apparatus such as an open roll, a closed type kneader (Bunbury mixer, kneader, etc.), and the like.

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature at 150 to 170°C for 3 to 10 minutes, and in the final kneading step, a method of kneading at 70 to 110°C for 1 to 5 minutes.

The tire relating to the present embodiment can be produced by a usual method using each corresponding rubber composition. That is, a metal cord is covered with an unvulcanized rubber composition corresponding to a belt topping rubber, and a ply forming a belt layer is obtained as a metal cord-rubber composite. Moreover, the unvulcanized rubber composition corresponding to a tread as obtained by the above-described method is molded into a shape of the tread. The tire can be produced by attaching them together with other tire members and molding them by a usual method on a tire molding machine, to form an unvulcanized tire, followed by heating and pressurizing this unvulcanized tire in a vulcanizer. A vulcanization condition is not particularly limited. Examples of vulcanization include, for example, a method of vulcanizing at 150 to 200°C for 10 to 30 minutes.

[Application of tire]

The tire relating to the present embodiment can be appropriately used as a heavy-duty tire. Besides, the heavy-duty tire is a tire on the premise that it is mounted on a car running on four wheels and refers to one having a maximum load capacity of 1000 kg or more. The maximum load capacity of the heavy-duty tire is preferably 1200 kg or more, more preferably 1400 kg or more.

EXAMPLES

Examples considered to be preferable in implementation (Examples) are shown below, though the scope of the present invention is not limited to Examples. Results calculated based on the following evaluation methods considering the tire having the basic structure shown in FIG. 1 and comprising the tread obtained according to the compounding in Table 2 and the belt layer described in Table 1 using various chemicals shown below are shown in Table 1.
Various chemicals used in Examples and Comparative examples are collectively shown below.

IR-based rubber: TSR20 (NR)
SBR: HPR840 manufactured by JSR Corporation (S-SBR, styrene content: 10% by mass, vinyl content: 42 mol%, Tg: -60°C, Mw: 190,000, non-extended)
Carbon black: Show Black N220 manufactured by Cabot Japan K.K. ($N_2SA$: 115 $m^2$/g, average primary particle size: 22 nm)
Silica: Ultrasil VN3 manufactured by Evonik Industries AG ($N_2SA$: 175 $m^2$/g, average primary particle size: 18 nm)
Silane coupling agent: Si266 manufactured by Evonik Industries AG (bis(3-triethoxysilylpropyl)disulfide)
Copolymer resin: Oppera PR383 manufactured by Exxon Mobil Corporation (hydrogenated DCPD-C9 resin, comprising styrene and cyclopentadiene as monomer components, content of styrene part: 1.78% by mass, softening point: 103°C, Mw: 770)
Wax: SUNNOC N manufactured by Ouchi Shinko Chemical Industry Co., Ltd. (paraffin wax)
Antioxidant: Antigen 6C manufactured by Sumitomo Chemical Co., Ltd. (N-(1,3-dimethylbutyl)-N'-phenyl-p-phenylenediamine)
Stearic acid: Bead stearic acid "CAMELLIA" manufactured by NOF CORPORATION
Zinc oxide: Zinc oxide No. 2 manufactured by Mitsui Mining & Smelting Co., Ltd.
Sulfur: Powdered sulfur manufactured by Karuizawa Sulfur Co, Ltd. (5% oil-containing powdered sulfur)
Vulcanization accelerator: Nocceler CZ manufactured by Ouchi Shinko Chemical Industry Co., Ltd. (N-cyclohexyl-2-benzothiazolylsulfenamide (CBS))

(Production of belt ply)

A steel cord with a 1×1 structure (monofilament) is covered with an unvulcanized rubber composition corresponding to a belt topping rubber, and a ply constituting a belt layer is obtained as a steel cord-rubber composite. An average content $C_2$, in % by mass, of an isoprene-based rubber in the belt topping rubber with a mass of the belt topping rubber being as 100% by mass and a total thickness $T_2$, in mm, of the belt layer are as described in Table 1, respectively.

(Production of tire)

According to the compounding formulations shown in Table 2, using a 1.7 L closed Banbury mixer, all chemicals other than sulfur and vulcanization accelerators are kneaded until a temperature reaches a discharge temperature at 160°C for 5 minutes to obtain a kneaded product. Next, using a twin-screw open roll, vulcanizing agents and vulcanization accelerators are added to the obtained kneaded product, and the mixture is kneaded for 4 minutes until the temperature reaches 105°C to obtain an unvulcanized rubber composition. The obtained unvulcanized rubber composition is molded into a shape of a tread, which is then attached together with the belt ply, the carcass, and other tire members, producing an unvulcanized tire, and the unvulcanized tire is vulcanized at 170°C to obtain each test tire described in Table 2, which has the basic structure in FIG. 1 (size: 295/70R22.5). Besides, a cord angle of the first belt ply 6a is -45 degrees, a cord angle of the second belt ply 6b is lower than ±1 degree, a cord angle of the third belt ply 6c is -15 degrees, a cord angle of the fourth belt ply 6d is +15 degrees, and a groove depth H of the circumferential groove is 18 mm.

<Wet grip performance after long-distance running>

Each test tire is mounted on all wheels of a truck, a braking distance from an initial speed of 50 km/h on a wet asphalt road surface after running 10,000 km is calculated, and measurement results are indicated as indexes by the following equation. The results show that the larger the index is, the shorter the braking distance is and the better the wet grip performance is.

(Wet grip performance index) = (braking distance of tire in Comparative example 2) / (braking distance of each test tire) $\times$ 100

Table 2

|  | Example | Comparative example | | |
|---|---|---|---|---|
|  | 1 | 1 | 2 | 3 |
| Compounding amount (parts by mass) | | | | |
| IR-based rubber | 80 | 100 | 80 | 100 |
| SBR | 20 | - | 20 | - |
| Carbon black | 40 | 40 | 40 | 40 |
| Silica | 30 | 30 | 30 | 30 |
| Silane coupling agent | 3.0 | 3.0 | 3.0 | 3.0 |
| Copolymer resin | 10 | 10 | - | - |
| Wax | 1.5 | 1.5 | 1.5 | 1.5 |
| Antioxidant | 2.0 | 2.0 | 2.0 | 2.0 |
| Stearic acid | 1.0 | 1.0 | 1.0 | 1.0 |
| Zinc oxide | 1.0 | 1.0 | 1.0 | 1.0 |
| Sulfur | 1.5 | 1.5 | 1.5 | 1.5 |
| Vulcanization accelerator | 1.0 | 1.0 | 1.0 | 1.0 |
| S (% by mass) | 1.14 | 0.09 | 1.10 | 0 |
| $C_1$ (% by mass) | 41.9 | 52.4 | 44.2 | 55.2 |
| $T_1$ (mm) | 15.0 | 5.0 | 15.0 | 5.0 |
| $a(=C_1/T_1)$ | 2.79 | 10.5 | 2.95 | 11.0 |
| $C_2$ (% by mass) | 55.5 | 55.5 | 55.5 | 55.5 |
| $T_2$ (mm) | 3.0 | 3.0 | 3.0 | 3.0 |
| $b (=C_2/T_2)$ | 18.5 | 18.5 | 18.5 | 18.5 |
| a/b | 0.15 | 0.57 | 0.16 | 0.59 |
| S/(a/b) | 7.6 | 0.16 | 6.9 | 0 |
| Wet grip performance | 120 | 95 | 100 | 90 |

REFERENCE SIGNS LIST

1. Heavy-duty tire
2. Tread surface
3. Tread
4. Cap rubber layer
5. Base rubber layer
6. Belt layer
7. Sidewall

8. Circumferential groove
9. Recessed part
10. Groove wall
12. Groove edge
15. Inner liner
16. Carcass
21. Metal cord
22. Topping rubber
H. Groove depth of circumferential groove
$T_1$. Total thickness of tread
$T_2$. Total thickness of belt layer
CL. Tire center line

## Claims

1. A heavy-duty tire comprising a tread, a carcass, and a belt layer, wherein the tread is composed of a rubber composition comprising:
a rubber component comprising an isoprene-based rubber; and a copolymer resin comprising styrene and cyclopentadiene as monomer components,

   wherein the carcass comprises a metal cord,
   wherein the belt layer is provided between the tread and the carcass,
   wherein a plurality of belt plies constituting the belt layer each consists of a metal cord and a belt topping rubber comprising an isoprene-based rubber, and
   wherein S/(a/b) is greater than 7.0, preferably greater than 7.0 and less than 100,
   when $a=C_1/T_1$ and $b=C_2/T_2$ are defined,
   where S represents a total styrene amount, in % by mass, in the rubber composition constituting the tread with a mass of the rubber composition constituting the tread being as 100% by mass, $C_1$ represents a content, in % by mass, of an isoprene-based rubber in the rubber composition constituting the tread with a mass of the rubber composition constituting the tread being as 100% by mass, $T_1$ represents a total thickness, in mm, of the tread, $C_2$ represents an average content of an isoprene-based rubber in the belt topping rubber with a mass of the belt topping rubber being as 100% by mass, and $T_2$ represents a total thickness, in mm, of the belt layer.

2. The heavy-duty tire of claim 1, wherein the belt layer comprises a high-angle belt ply having 10 degrees or higher of an absolute value of a cord angle with respect to a tire circumferential direction, and a low-angle belt ply having 5 degrees or lower of an absolute value of a cord angle with respect to the tire circumferential direction.

3. The heavy-duty tire of claim 1 or 2,

   wherein the belt layer comprises two or more high-angle belt plies and one or more low-angle belt plies, and
   wherein the low-angle belt ply is provided between the two high-angle belt plies.

4. The heavy-duty tire of any one of claims 1 to 3, wherein the tread has a groove provided with a recessed part that is recessed outward in a groove width direction with respect to a groove edge that appears on a tread surface.

5. The heavy-duty tire of any one of claims 1 to 4, wherein a is less than 3.0, preferably 1.0 or more and less than 3.0.

6. The heavy-duty tire of any one of claims 1 to 5, wherein the metal cord included in the belt ply has a 1×1 structure.

7. The heavy-duty tire of any one of claims 1 to 6, wherein a content of the copolymer resin based on 100 parts by mass of the rubber component in the rubber composition constituting the tread is 5 parts by mass or more.

8. The heavy-duty tire of any one of claims 1 to 7, wherein the rubber component constituting the tread further comprises a styrene-butadiene rubber.

9. The heavy-duty tire of any one of claims 1 to 8, wherein the rubber composition constituting the tread comprises 10 parts by mass or more of silica based on 100 parts by mass of the rubber component.

# FIG.1

# FIG. 2

# FIG. 3

# FIG.4

Europäisches
Patentamt

European
Patent Office

Office européen
des brevets

**EUROPEAN SEARCH REPORT**

**Application Number**

EP 25 20 9962

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2021 109935 A (SUMITOMO RUBBER IND) 2 August 2021 (2021-08-02) * paragraphs [0017], [0026] - [0028], [0037], [0040]; claims 1-8 * | 1-9 | INV. B60C1/00 B60C9/20 B60C9/22 B60C11/13 C08L7/00 |
| A | EP 3 783 060 A1 (GOODYEAR TIRE & RUBBER [US]) 24 February 2021 (2021-02-24) * paragraphs [0084], [0099], [0101] * | 1 | |
| Y | US 2017/182845 A1 (REHAB HICHEM [FR] ET AL) 29 June 2017 (2017-06-29) * paragraphs [0024], [0147] - [0151], [0167]; claims 1-18; figure 1 * | 1-9 | |
| Y | JP 2024 032596 A (SUMITOMO RUBBER IND) 12 March 2024 (2024-03-12) * claims 1-15; figures 1-3 * | 4 | |
| Y | US 2002/011296 A1 (MIYAZAKI SHINICHI [JP] ET AL) 31 January 2002 (2002-01-31) * paragraphs [0042] - [0045]; claim 1; figure 4 * | 6 | |

TECHNICAL FIELDS
SEARCHED (IPC)

B60C
C08C
C08L

The present search report has been drawn up for all claims

| Place of search | Date of completion of the search | Examiner |
|---|---|---|
| Munich | 13 March 2026 | Carneiro, Joaquim |

EPO FORM 1503 03.82 (P04C01)

## ANNEX TO THE EUROPEAN SEARCH REPORT
## ON EUROPEAN PATENT APPLICATION NO.

EP 25 20 9962

13-03-2026

| Patent document cited in search report | Publication date | Patent family member(s) | Publication date |
|---|---|---|---|
| JP 2021109935 A | 02-08-2021 | JP 7484174 B2<br>JP 2021109935 A | 16-05-2024<br>02-08-2021 |
| EP 3783060 A1 | 24-02-2021 | BR 102020015387 A2<br>CN 112300460 A<br>DE 202020006026 U1<br>DE 202020006027 U1<br>DE 202020006028 U1<br>EP 3783060 A1<br>JP 7645619 B2<br>JP 2021021070 A<br>KR 20210015671 A<br>US 2021032442 A1 | 20-04-2021<br>02-02-2021<br>13-05-2024<br>13-05-2024<br>16-05-2024<br>24-02-2021<br>14-03-2025<br>18-02-2021<br>10-02-2021<br>04-02-2021 |
| US 2017182845 A1 | 29-06-2017 | CN 106457894 A<br>EP 3160764 A1<br>FR 3022844 A1<br>US 2017182845 A1<br>WO 2015197292 A1 | 22-02-2017<br>03-05-2017<br>01-01-2016<br>29-06-2017<br>30-12-2015 |
| JP 2024032596 A | 12-03-2024 | EP 4331868 A1<br>JP 2024032596 A | 06-03-2024<br>12-03-2024 |
| US 2002011296 A1 | 31-01-2002 | CN 1328926 A<br>DE 60122425 T2<br>EP 1162086 A2<br>ID 30463 A<br>JP 2001354007 A<br>SG 100711 A1<br>US 2002011296 A1 | 02-01-2002<br>14-12-2006<br>12-12-2001<br>13-12-2001<br>25-12-2001<br>26-12-2003<br>31-01-2002 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021109935 A
- JP 2009002594 A
- EP 3427975 A
- JP 6856781 B
- EP 3173251 A

**Non-patent literature cited in the description**

- *Akita Prefectural University Web Journal B*, 2019, vol. 6, 216-222
- *Rubber Chemistry and Technology*, 2012, vol. 85 (3), 408-449
- A comparison of surface morphology and chemistry of pyrolytic carbon blacks with commercial carbon blacks. *Powder Technology*, 2005, vol. 160, 190-193